# EUROPEAN PATENT APPLICATION

(11) **EP 4 647 925 A1**
(43) Date of publication of application: **12.11.2025**
(21) Application number: 24762989.2
(22) Date of filing: 18.02.2024
(51) Int. Cl.: G06F 16/17

(54) **METHOD FOR MANAGING THUMBNAILS AND RELATED APPARATUS**

(30) Priority: 01.03.2023 CN 202310232085
(71) Applicant: Huawei Technologies Co., Ltd., Shenzhen, Guangdong 518129 (CN)
(72) Inventor: LI, Weilu, Shenzhen, Guangdong 518129 (CN); ZHANG, Hongli, Shenzhen, Guangdong 518129 (CN); JIANG, Jinpeng, Shenzhen, Guangdong 518129 (CN)
(74) Representative: Maiwald GmbH
(86) International application number: PCT/CN2024/077390
(87) International publication number: WO 2024/179306

(57) **Abstract**

This application provides a thumbnail management method and a related apparatus. One or more applications are installed in an electronic device. The method includes: In response to an operation performed by a user on a first application, the first application invokes a thumbnail service; the thumbnail service obtains an address identifier that is of a first thumbnail corresponding to a first original image and that is in storage space, in response to invoking of the first application; the thumbnail service returns the address identifier of the first thumbnail to the first application; and the first application displays the first thumbnail. Thumbnails of original images on the electronic device are managed and stored in a unified manner through the thumbnail service, and an application does not need to cache the thumbnails. This can save storage space on the electronic device, and resolve a problem of a waste of storage space.

## Description

This application claims priority to Chinese Patent Application No. 202310232085.5, filed with the China National Intellectual Property Administration on March 1, 2023 and entitled "THUMBNAIL MANAGEMENT METHOD AND RELATED APPARATUS", which is incorporated herein by reference in its entirety.

### TECHNICAL FIELD

This application relates to the field of terminal technologies, and in particular, to a thumbnail management method and a related apparatus.

### BACKGROUND

Currently, some applications (applications, APPs) on an electronic device have permission to access original images of the electronic device. When an application accesses an original image, if the application does not cache a thumbnail of the original image, the application performs processing such as decoding and subsampling on the original image, generates the thumbnail of the original image, caches the thumbnail, and then reads the thumbnail.

In this thumbnail management method, for an application that can directly or indirectly access an original image, a thumbnail corresponding to the original image is cached. As applications that have permission to directly or indirectly access original images of the electronic device increase on the electronic device, for a same original image, a plurality of thumbnails corresponding to the original image may be stored in the electronic device. For the electronic device, the plurality of thumbnails corresponding to the same original image occupy large storage space, causing a waste of storage space.

### SUMMARY

This application provides a thumbnail management method and a related apparatus, to resolve a problem of a waste of storage space.

According to a first aspect, this application provides a thumbnail management method. The method may be performed by an electronic device, or the method may be performed by a component (for example, a chip or a chip system) configured in the electronic device, or may be implemented by a logical module or software that can implement all or some functions of the electronic device. This is not limited in this application. One or more applications are installed in the electronic device.

For example, the method includes: In response to an operation performed by a user on a first application, the first application invokes a thumbnail service; the thumbnail service obtains an address identifier that is of a first thumbnail corresponding to a first original image and that is in storage space, in response to invoking of the first application; and the thumbnail service returns the address identifier of the first thumbnail to the first application.

Based on the foregoing solution, thumbnails of original images on the electronic device are managed and stored in a unified manner through the thumbnail service, that is, the thumbnails are cached in the electronic device in a unified manner, and an application does not need to cache the thumbnails. This can save storage space on the electronic device, and resolve a problem of a waste of storage space. In addition, an application that has permission to directly or indirectly access an original image on the electronic device may invoke the thumbnail service to obtain an address identifier of a thumbnail. This reduces a quantity of times the electronic device performs operations such as decoding and subsampling on the original image, reduces power consumption of the electronic device, and resolves an electricity consumption problem. For example, because an application does not need to cache a thumbnail again, when storage space on the electronic device is insufficient, a thumbnail cached in the electronic device is not cleared when a user clears a cache of the application. After the cache of the application is cleared, the electronic device does not need to perform steps of generating the thumbnail and caching the thumbnail again when the application obtains the thumbnail. Therefore, this can reduce a quantity of times the electronic device performs operations such as decoding and subsampling on an original image, reduce power consumption of the electronic device, and resolve an electricity consumption problem.

With reference to the first aspect, in some possible implementations, before the thumbnail service obtains the address identifier that is of the first thumbnail corresponding to the first original image and that is in the storage space, the method further includes: The thumbnail service determines whether the address identifier of the first thumbnail exists.

It may be understood that, when the first thumbnail is cached in the electronic device, the address identifier of the first thumbnail exists; or when the first thumbnail is not cached in the electronic device, the address identifier of the first thumbnail does not exist. In other words, the thumbnail service may determine whether the address identifier of the first thumbnail exists, to determine whether the first thumbnail has been cached in the electronic device.

With reference to the first aspect, in some possible implementations, that the thumbnail service obtains the address identifier that is of the first thumbnail corresponding to the first original image and that is in the storage space, in response to invoking of the first application includes: In response to invoking of the first application, when the address identifier of the first thumbnail does not exist, the thumbnail service generates the first thumbnail based on the first original image; and the thumbnail service stores the first thumbnail to the storage space, to obtain the address identifier of the first thumbnail; or in response to invoking of the first application, when the address identifier of the first thumbnail exists, the thumbnail service reads the address identifier of the first thumbnail from the storage space.

With reference to the first aspect, in some possible implementations, the method further includes: detecting an operation performed by the user on a second application in the electronic device. The operation may be starting the second application or opening an interface of the second application. After the interface is opened, the first thumbnail may be displayed. Correspondingly, the second application invokes the thumbnail service. The thumbnail service obtains the address identifier of the first thumbnail, in response to invoking of the second application; the thumbnail service returns the address identifier of the first thumbnail to the second application; and the second application displays the first thumbnail.

According to a second aspect, this application provides a thumbnail management method. The method may be performed by an electronic device, or the method may be performed by a component (for example, a chip or a chip system) configured in the electronic device, or may be implemented by a logical module or software that can implement all or some functions of the electronic device. This is not limited in this application. One or more applications are installed in the electronic device.

For example, the method includes: In response to an operation performed by a user on a first application, the first application invokes a thumbnail storage module; in response to invoking of the first application, the thumbnail storage module determines whether an address identifier of a first thumbnail corresponding to a first original image exists; and when the address identifier of the first thumbnail exists, the thumbnail storage module returns the address identifier of the first thumbnail to the first application; or when the address identifier of the first thumbnail does not exist, the thumbnail storage module returns an indicator to the first application, where the indicator indicates that the address identifier of the first thumbnail does not exist; the first application invokes a thumbnail service; the thumbnail service obtains the address identifier that is of the first thumbnail and that is in storage space, in response to invoking of the first application; the thumbnail service returns the address identifier of the first thumbnail to the first application; and the first application displays the first thumbnail.

The thumbnail storage module is deployed at an application layer of an operating system of the electronic device, the thumbnail service is deployed at a framework layer of the operating system of the electronic device, and the thumbnail service also includes the thumbnail storage module.

Based on the foregoing solution, thumbnails of original images on the electronic device are managed and stored in a unified manner through the thumbnail service, that is, the thumbnails are cached in the electronic device in a unified manner, and an application does not need to cache the thumbnails. This can save storage space on the electronic device, and resolve a problem of a waste of storage space. In addition, the thumbnail storage module is deployed at the application layer of the electronic device. When the first thumbnail is cached in the electronic device, the first application may directly read the first thumbnail from the preset storage space through the thumbnail storage module at the application layer, and does not need to invoke the thumbnail service across layers to obtain the first thumbnail, so that the first application can read the thumbnail more conveniently and efficiently. This can save time spent in reading a thumbnail across layers, improve thumbnail reading performance, and resolve a thumbnail display delay problem. In addition, an application that has permission to directly or indirectly access an original image on the electronic device may invoke the thumbnail service to obtain an address identifier of a thumbnail. This reduces a quantity of times the electronic device performs operations such as decoding and subsampling on the original image, reduces power consumption of the electronic device, and resolves an electricity consumption problem. For example, because an application does not need to cache a thumbnail again, when storage space on the electronic device is insufficient, a thumbnail cached in the electronic device is not cleared when a user clears a cache of the application. After the cache of the application is cleared, the electronic device does not need to perform steps of generating the thumbnail and caching the thumbnail again when the application obtains the thumbnail. Therefore, this can reduce a quantity of times the electronic device performs operations such as decoding and subsampling on an original image, reduce power consumption of the electronic device, and resolve an electricity consumption problem.

With reference to the second aspect, in some possible implementations, that the thumbnail service obtains the address identifier that is of the first thumbnail and that is in the storage space, in response to invoking of the first application includes: In response to invoking of the first application, the thumbnail service generates the first thumbnail based on the first original image; and the thumbnail service stores the first thumbnail to the storage space, to obtain the address identifier of the first thumbnail.

With reference to the second aspect, in some possible implementations, the method further includes: detecting an operation performed by the user on a second application in the electronic device. The operation may be starting the second application or opening an interface of the second application. After the interface is opened, the first thumbnail may be displayed. Correspondingly, the second application invokes the thumbnail storage module. In response to invoking of the second application, the thumbnail storage module determines whether the address identifier of the first thumbnail exists; and when the address identifier of the first thumbnail exists, the thumbnail storage module returns the address identifier of the first thumbnail to the second application; or when the address identifier of the first thumbnail does not exist, the thumbnail storage module returns the indicator to the second application; the second application invokes the thumbnail service; the thumbnail service obtains the address identifier that is of the first thumbnail and that is in the storage space, in response to invoking of the second application; the thumbnail service returns the address identifier of the first thumbnail to the second application; and the second application displays the first thumbnail.

With reference to the first aspect and the second aspect, in some possible implementations, the method further includes: When the electronic device is in a sleep state, or when preset trigger time is reached, the thumbnail service detects whether a corresponding address identifier of a second thumbnail exists for a second original image currently stored in the electronic device; when the address identifier of the second thumbnail does not exist, the thumbnail service generates the second thumbnail based on the second original image; and the thumbnail service stores the second thumbnail to the storage space, to obtain the address identifier of the second thumbnail.

The second original image is an original image whose corresponding thumbnail is not currently cached in the electronic device.

Even if no first application invokes the thumbnail service, the thumbnail service may actively manage the thumbnail. When the address identifier of the second thumbnail does not exist, the thumbnail service may generate the second thumbnail after performing operations such as decoding and subsampling on the second original image, and may store the second thumbnail to a corresponding folder in the preset storage space, to obtain the address identifier of the second thumbnail. Therefore, when the first application invokes the thumbnail service, the thumbnail service can more quickly return an address identifier of a thumbnail required by the first application to the first application. This may increase a speed of obtaining a thumbnail by the first application.

With reference to the first aspect and the second aspect, in some possible implementations, the method further includes: in response to a creation operation performed by the user, creating an image set, where the image set includes at least one original image, and a cover of the image set is a third thumbnail with a reference flag (reference flag); storing, by the thumbnail service, the third thumbnail to the storage space; and when the electronic device clears a thumbnail in the storage space, retaining the third thumbnail corresponding to the cover based on the reference flag.

The image set may be a set of original images classified by time, place, user-customized tag, system-defined tag (for example, tags such as "wonderful moment", "person", "animal", and "building"), or the like. This is not limited in this application.

In other words, for thumbnails that are automatically set by a user or a system as a cover of an image set, a thumbnail management module in the thumbnail service may set reference flags for the thumbnails, to prevent the thumbnail from being cleared due to aging, or to prevent the thumbnail from being cleared in a process in which a cache of the operating system of the electronic device is cleared. This avoids a problem that a blank cover or a black cover is displayed because a cover of an image set is cleared, and helps improve user experience.

According to a third aspect, this application provides an electronic device. The electronic device may be configured to implement the method in any one of the first aspect and the possible implementations of the first aspect, or may be configured to implement the method in any one of the second aspect and the possible implementations of the second aspect. The electronic device includes a corresponding module configured to perform the foregoing method. The module included in the electronic device may be implemented through software and/or hardware.

According to a fourth aspect, this application provides an electronic device. The electronic device includes at least one processor and at least one communication interface. The processor is coupled to the communication interface, and may be configured to execute a computer program, to implement the thumbnail management method in any one of the first aspect and the possible implementations of the first aspect, or to implement the thumbnail management method in any one of the second aspect and the possible implementations of the second aspect.

Optionally, the electronic device further includes a memory, and the processor is coupled to the memory.

According to a fifth aspect, this application provides a chip system. The chip system includes at least one processor, configured to support implementation of a function in any one of the first aspect and the possible implementations of the first aspect, or configured to support implementation of a function in any one of the second aspect and the possible implementations of the second aspect, for example, processing data in the foregoing method.

In a possible design, the chip system further includes a memory, the memory is configured to store program instructions and data, and the memory is located inside the processor or outside the processor.

The chip system may include a chip, or may include a chip and another discrete device.

According to a sixth aspect, a computer-readable storage medium is provided. The computer storage medium stores a computer program (which may also be referred to as code or instructions). When the computer program is run on a computer, the method in any one of the first aspect and the possible implementations of the first aspect is performed, or the method in any one of the second aspect and the possible implementations of the second aspect is performed.

According to a seventh aspect, a computer program product is provided. The computer program product includes a computer program (which may also be referred to as code or instructions). When the computer program is run, the method in any one of the first aspect and the possible implementations of the first aspect is performed, or the method in any one of the second aspect and the possible implementations of the second aspect is performed.

It should be understood that the third aspect to the seventh aspect of this application correspond to the technical solutions of the first aspect and the second aspect of this application, and beneficial effects achieved in the aspects and corresponding feasible implementations are similar. Details are not described again.

### BRIEF DESCRIPTION OF DRAWINGS

FIG. 1 is a diagram of a structure of an electronic device applicable to a thumbnail management method according to an embodiment of this application;
FIG. 2 is a structural block diagram of software of an electronic device applicable to a thumbnail management method according to an embodiment of this application;
FIG. 3 is another structural block diagram of software of an electronic device applicable to a thumbnail management method according to an embodiment of this application;
FIG. 4 is still another structural block diagram of software of an electronic device applicable to a thumbnail management method according to an embodiment of this application;
FIG. 5 is a schematic flowchart of a thumbnail management method according to an embodiment of this application;
FIG. 6 is another schematic flowchart of a thumbnail management method according to an embodiment of this application; and
FIG. 7 is still another schematic flowchart of a thumbnail management method according to an embodiment of this application.

### DESCRIPTION OF EMBODIMENTS

The following describes technical solutions of this application with reference to the accompanying drawings.

First, in embodiments of this application, words such as "first", "second", and "third" are used to distinguish between same items or similar items having basically same functions and effects. For example, a first original image and a second original image are used to distinguish between different original images, a first thumbnail, a second thumbnail, and a third thumbnail are used to distinguish between different thumbnails, and a sequence thereof is not limited. A person skilled in the art may understand that the words such as "first", "second", and "third" do not limit a quantity and an execution sequence, and the words such as "first", "second", and "third" do not indicate a definite difference.

In some examples, an original image may also be referred to as a picture. A thumbnail may be obtained by processing an original image or a picture.

Second, in embodiments of this application, the terms "include", "have", and any other variant thereof are intended to cover a non-exclusive inclusion. For example, an apparatus, system, product, or device that includes a series of assemblies, modules, or units is not necessarily limited to those assemblies, modules, or units that are clearly listed, but may include other assemblies, modules, or units that are not explicitly listed or are inherent to such an apparatus, system, product, or device.

Third, in embodiments of this application, "and/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between associated objects, but does not exclude an "and" relationship between the associated objects. A specific meaning indicated by the character "/" may be understood with reference to the context.

Fourth, in embodiments of this application, words such as "example" or "for example" represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a related concept in a specific manner.

For ease of understanding, the following briefly describes terms used in this application.
1. Thumbnail: a small image obtained after a picture on a web page or in an electronic device is compressed. Data of the thumbnail usually includes a hyperlink pointing to an original image. The thumbnail may include a large thumbnail (also referred to as a miniature image) and a small thumbnail (also referred to as a thumb image), and a size of the small thumbnail is smaller than a size of the large thumbnail.
2. Subsampling (subsampled): also referred to as downsampling (downsampled), which can be generally understood as reducing a size of an image to reduce a quantity of sampling points in a matrix.
3. Handle (handle): an identifier used to identify an object or an instance. The object includes a module, an application instance, a window, a control, a bitmap, a graphics device interface (graphics device interface, GDI) object, a resource, a file, and the like. In other words, the handle can uniquely identify an object or an instance. In embodiments of this application, the handle is used as an address identifier.

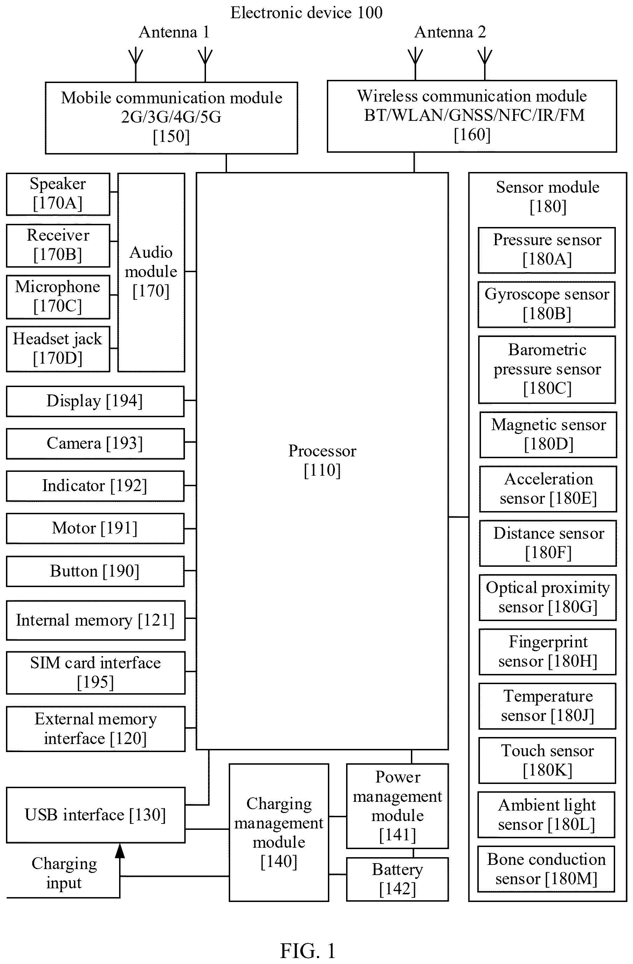

Before a thumbnail management method provided in embodiments of this application is described in detail below, an electronic device applicable to embodiments of this application is first described as an example with reference to FIG. 1, FIG. 2, and FIG. 3.

The thumbnail management method provided in embodiments of this application may be applied to an electronic device such as a mobile phone, a tablet computer, a smartwatch, a wearable device, an in-vehicle device, a notebook computer, a personal computer (personal computer, PC), an ultra-mobile personal computer (ultra-mobile personal computer, UMPC), a netbook, a personal digital assistant (personal digital assistant, PDA), or a distributed device. A specific type of the electronic device is not limited in embodiments of this application.

In addition, the method in embodiments of this application may support operating systems such as an Android operating system (Android operating system, Android OS), HarmonyOS, and OpenHarmony. This is not limited in embodiments of this application.

FIG. 1 is a diagram of a structure of an electronic device applicable to a thumbnail management method according to an embodiment of this application.

For example, FIG. 1 is a diagram of a structure of an electronic device 100. As shown in FIG. 1, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include one or more of an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and the like. Different processing units may be independent devices, or may be integrated into one or more processors.

The application processor outputs a sound signal through the audio module 170 (for example, the speaker 170A), or displays an image or a video on the display 194.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

The processor 110 may perform different operations by executing the instructions, to implement different functions. For example, the instructions may be instructions pre-stored in the memory before the device is delivered from a factory, or may be instructions read from a new APP after a user installs the APP in a use process. This is not limited in embodiments of this application.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM interface, a USB interface, and/or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing an audio through the headset. The interface may alternatively be configured to connect to another electronic device such as an augmented reality (augmented reality, AR) device. It may be understood that an interface connection relationship between modules illustrated in this application is merely an example for description, and does not constitute a limitation on the structure of the electronic device 100. In some other embodiments, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. When charging the battery 142, the charging management module 140 may further supply power to the electronic device 100 through the power management module 141.

The power management module 141 is configured to connect the battery 142, the charging management module 140, and the processor 110. The power management module 141 receives an input from the battery 142 and/or the charging management module 140, and supplies power to the processor 110, the internal memory 121, the external memory, the display 194, the camera 193, the wireless communication module 160, and the like. The power management module 141 may further be configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may further be multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), a fifth generation (5th generation, 5G) communication system, BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194, which may also be referred to as a screen, may be configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED (Mini LED), a micro-LED (Micro LED), a micro-OLED (Micro-OLED), a quantum dot light-emitting diode (quantum dot light-emitting diode, QLED), or the like. In some embodiments, the electronic device 100 may include one or more displays 194.

It should be understood that the display 194 may further include more components, for example, a backlight panel or a drive circuit. The backlight panel may be configured to provide a light source, and the display panel emits light based on the light source provided by the backlight panel. The drive circuit may be configured to control a liquid crystal of a liquid crystal layer to transmit light or not to transmit light.

The electronic device 100 can implement a photographing function through the ISP, the camera 193, the video codec, the GPU, the display 194, the application processor, and the like.

The external memory interface 120 may be configured to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a sound playing function or an image playing function), and the like. The data storage area may store data (for example, audio data or an address book) and the like created when the electronic device 100 is used. In addition, the internal memory 121 may include a high-speed random access memory, and may further include a non-volatile memory, for example, at least one magnetic disk storage device, a flash storage device, or a universal flash storage (universal flash storage, UFS).

The electronic device 100 may implement an audio function, for example, music playing or recording, through the audio module 170, the speaker 170A, the receiver 170B, the microphone 170C, the headset jack 170D, the application processor, and the like.

It may be understood that the structure shown in this application does not constitute a specific limitation on the electronic device 100. In some other embodiments, the electronic device 100 may include more or fewer components than those shown in the figure, or a combination of some components, or splits from some components, or a different component layout. The components shown in the figure may be implemented by hardware, software, or a combination of software and hardware.

A software system of the electronic device 100 may use a layered architecture, an event-driven architecture, a microkernel architecture, a microservice architecture, or a cloud architecture. In the layered architecture, the software system of the electronic device 100 is divided into several layers, and each layer has a clear role and task. The layers communicate with each other through a software interface. In this application, an operating system such as HarmonyOS, OpenHarmony, or Android of the layered architecture is used as an example to describe a software structure of the electronic device 100, but a type that is of an operating system of the electronic device and that is used in the thumbnail management method provided in embodiments of this application should be limited.

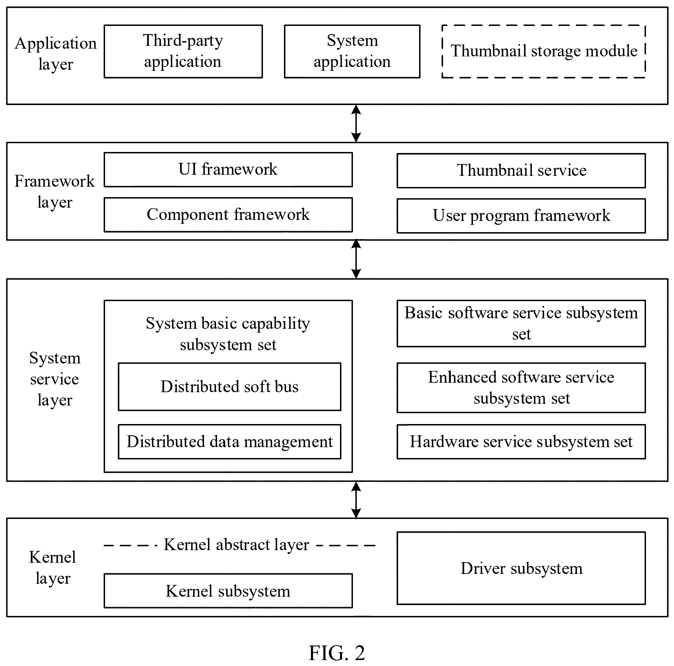

FIG. 2 is a structural block diagram of software of an electronic device applicable to a thumbnail management method according to an embodiment of this application.

As shown in FIG. 2, in some embodiments, an operating system is divided into four layers: an application layer, a framework layer, a system service layer, and a kernel layer from top to bottom. In some embodiments, the electronic device 100 further includes hardware such as a GPU, a CPU, and a display.

The application layer may include a series of application packages. As shown in FIG. 2, the application layer may include a system application and a third-party application. The system application may be understood as some built-in applications of the system, for example, Camera, Gallery (or Album), Calendar, Phone, Map, Bluetooth, Video, Music, and other applications. The third-party application may be understood as a non-system application, and may be downloaded and installed from an application store or the like. The thumbnail management method provided in embodiments of this application is applicable to a third-party application and a system application that have permission to directly or indirectly access an original image.

In some implementations, the application layer may further include a thumbnail storage module. The thumbnail storage module may provide a thumbnail-related service for the third-party application and the system application, for example, determine whether a thumbnail required by an application (including the third-party application or the system application) exists, and may return an address identifier of the thumbnail required by the application to the application when the thumbnail required by the application exists.

The framework layer may include a thumbnail service, a user interface (user interface, UI) framework, a user program framework, and a component framework. The thumbnail service may provide a thumbnail-related service for the third-party application and the system application, for example, obtain an address identifier of a thumbnail. For detailed descriptions of the thumbnail service, refer to related descriptions below. The framework layer provides the user program framework and the component framework in a plurality of languages such as a C language, a C++ language, and a JavaScript (JS) language for applications of the operating system, as well as a multi-language framework (application programming interface, API) open to various software and hardware services. In addition, the framework layer provides the UI framework in a plurality of languages such as a C language, a C++ language, and a JS language for devices. APIs supported by different devices are related to a degree of component-based tailoring of the system.

The system service layer may include a system basic capability subsystem set, a basic software service subsystem set, an enhanced software service subsystem set, and a hardware service subsystem set. The system service layer is a set of core capabilities of the operating system, and provides a service for an application through the framework layer.

The system basic capability subsystem set may include subsystems such as a distributed soft bus and distributed data management, and the system basic capability subsystem set may provide basic capabilities for operations such as running, scheduling, and migration of distributed applications on a plurality of devices.

The basic software service subsystem set may include subsystems such as event notification, phone, and multimedia, and may provide common and universal software services.

The enhanced software service subsystem set may include subsystems such as a smart screen-dedicated service, a wearable-dedicated service, and an internet of things (internet of things, IoT)-dedicated service, and may provide differentiated capability-enhanced software services for different devices.

The hardware service subsystem set may include subsystems such as a location service, biometric feature recognition, a wearable-dedicated hardware service, and an IoT-dedicated hardware service, and may provide a hardware service.

It should be noted that, based on deployment environments of different device forms, the basic software service subsystem set, the enhanced software service subsystem set, and the hardware service subsystem set may be tailored based on a subsystem granularity, and each subsystem may be tailored based on a function granularity. This is not limited in embodiments of this application.

The kernel layer may include a kernel subsystem and a driver subsystem. The operating system may adopt a multi-kernel design. Based on the kernel subsystem, the operating system supports selection of an appropriate OS kernel for different resource-limited devices. A kernel abstract layer (kernel abstract layer, KAL) shields differences between a plurality of kernels, and provides basic kernel capabilities for an upper layer, including process management/thread management, memory management, file system management, network management, peripheral management, and the like. A driver framework in the driver subsystem is a basis for openness of a hardware ecosystem of the operating system, and may provide a unified peripheral access capability and a driver development and management framework.

In embodiments of this application, as shown in FIG. 2, the electronic device may include the thumbnail service, so that the electronic device has a capability of implementing the thumbnail management method provided in this application.

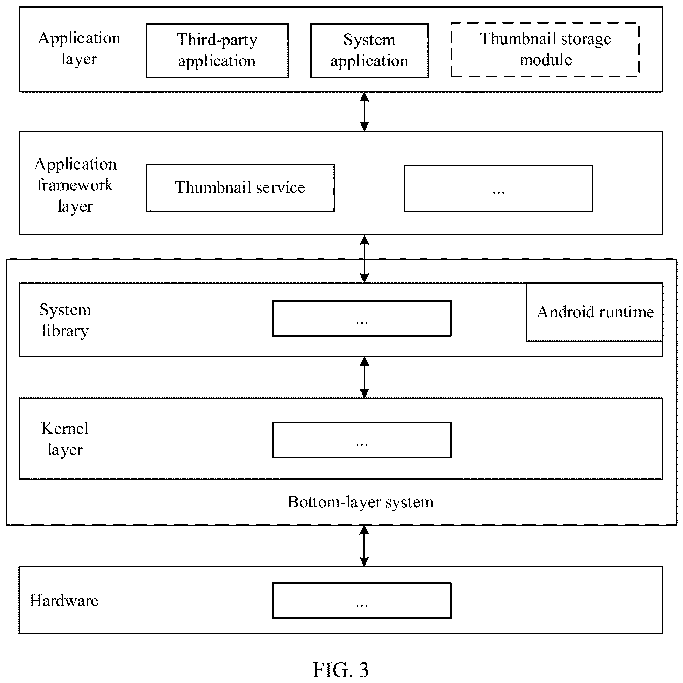

FIG. 3 is another structural block diagram of software of an electronic device applicable to a thumbnail management method according to an embodiment of this application.

As shown in FIG. 3, in some embodiments, an Android operating system includes an application layer, an application framework layer, an Android runtime (Android runtime) and a system library, and a kernel layer from top to bottom.

In some embodiments, the electronic device 100 further includes hardware such as a GPU, a CPU, and a display.

The application layer may include a series of application packages. As shown in FIG. 3, the application layer may include a system application and a third-party application. The system application may be understood as some built-in applications of the system, for example, Camera, Gallery, Calendar, Phone, Map, Bluetooth, Video, Music, and other applications. The third-party application may be understood as a non-system application, and may be downloaded and installed from an application store or the like. The thumbnail management method provided in embodiments of this application is applicable to a third-party application and a system application that have permission to directly or indirectly access an original image.

In some implementations, the application layer may further include a thumbnail storage module. The thumbnail storage module may provide a thumbnail-related service for the third-party application and the system application, for example, determine whether a thumbnail required by an application (including the third-party application or the system application) exists, and may return an address identifier of the thumbnail required by the application to the application when the thumbnail required by the application exists.

The application framework layer provides an API and a programming framework for an application at the application layer. The application framework layer includes some predefined functions, for example, a thumbnail service as shown in FIG. 3. This is not limited in embodiments of this application. In response to invoking of the third-party application and the system application, the thumbnail service may provide a thumbnail-related service for the third-party application and the system application, for example, obtain an address identifier of a thumbnail. For detailed descriptions of the thumbnail service, refer to related descriptions below.

The Android runtime may include a core library and a virtual machine. The Android runtime is responsible for scheduling and management of the Android operating system.

The core library may include two parts: a function that needs to be invoked in a Java language, and a core library of the Android operating system.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

As not shown in FIG. 3, the system library may include a plurality of functional modules, for example, a status monitoring service, a surface manager (surface manager), a media library (media library), a three-dimensional graphics processing library (for example, OpenGL ES), and a two-dimensional (2 dimensions, 2D) graphics engine (for example, SGL).

The kernel layer is a layer between hardware and software. As not shown in FIG. 3, the kernel layer may include a power management service, a sensor service (which may also be referred to as a sensor driver), a display service (which may also be referred to as a display driver), a camera driver, an audio driver, and the like. This is not limited in embodiments of this application.

In embodiments of this application, as shown in FIG. 3, the electronic device may include the thumbnail service, so that the electronic device has a capability of implementing the thumbnail management method provided in this application.

It should be understood that FIG. 1, FIG. 2, and FIG. 3 are merely examples, and should not constitute any limitation on embodiments of this application.

Currently, some applications on an electronic device have permission to directly or indirectly access original images of the electronic device. When an application accesses an original image, if the application does not cache a thumbnail of the original image, the application performs processing such as decoding and subsampling on the original image, generates the thumbnail of the original image, caches the thumbnail, and then reads the thumbnail. In this thumbnail management method, if there are a plurality of applications that are on the electronic device and that have permission to directly or indirectly access original images of the electronic device, the plurality of applications perform operations such as decoding and subsampling on the original images, generates thumbnails of the original images, and caches the thumbnails.

For the electronic device, a plurality of thumbnails corresponding to a same original image occupy large storage space, causing a waste of storage space. In addition, as applications that have permission to directly or indirectly access original images increase on the electronic device, the electronic device repeatedly performs operations such as decoding and subsampling on a same original image for a plurality of times. Consequently, power consumption of the electronic device is high, and electricity consumption is severe.

For the foregoing problem, embodiments of this application provide a thumbnail management method and a related apparatus. Thumbnails of original images on an electronic device are managed and stored in a unified manner through a thumbnail service, that is, the thumbnails are cached in the electronic device in a unified manner, and an application does not need to cache the thumbnails. This can save storage space on the electronic device, and resolve a problem of a waste of storage space. In addition, an application that has permission to directly or indirectly access an original image on the electronic device may invoke the thumbnail service to obtain an address identifier of a thumbnail. This reduces a quantity of times the electronic device performs operations such as decoding and subsampling on the original image, reduces power consumption of the electronic device, and resolves an electricity consumption problem. For example, the application that can directly or indirectly access the original image may include but is not limited to an instant messaging application, a shopping application, a game community application, a video application, or the like.

Before the thumbnail management method provided in this application is described, a software architecture of an electronic device applicable to the thumbnail management method provided in this application is described again.

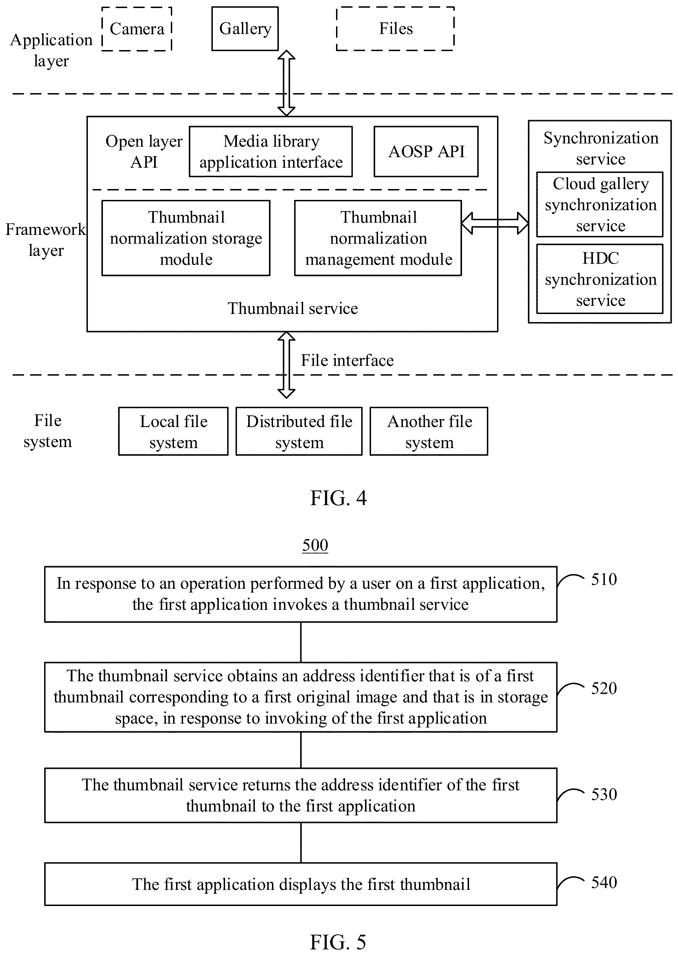

FIG. 4 is still another structural block diagram of software of an electronic device applicable to a thumbnail management method according to an embodiment of this application.

This application mainly improves an architecture layer of an operating system of the electronic device. As shown in FIG. 4, Android is used as an example, and a thumbnail service is deployed at a framework layer. The thumbnail service may include an open layer API, a thumbnail normalization storage module (which may be referred to as a thumbnail storage module briefly), and a thumbnail normalization management module (which may be referred to as a thumbnail management module briefly).

The open layer API may include an Android open source project (Android open source project, AOSP) API and a media library application interface (media library API). The AOSP API includes but is not limited to a media storage (mediastorage), and a function interface for obtaining data such as a bitmap (bitmap), an image (image), and metadata (metadata). The media library application interface is an enhanced interface customized based on the thumbnail service in this embodiment of this application. An application (including a system application and a third-party application) at an application layer may invoke the AOSP API and/or the media library application interface.

The thumbnail storage module may provide an efficient thumbnail deduplication capability. For detailed descriptions, refer to related descriptions below.

The thumbnail management module may perform data exchange with some synchronization services, for example, may perform data exchange with a cloud gallery synchronization service and a home data center (home data center, HDC) synchronization service, generate a thumbnail based on an original image stored in a gallery such as a local gallery (a gallery on the electronic device), a cloud gallery, a home storage gallery, or a distributed gallery, and store the generated thumbnail to a corresponding file system, for example, a local file system, a distributed file system, and another file system shown in FIG. 4.

In some implementations, the thumbnail management module may further provide an aging mechanism and another management capability for thumbnails. For detailed descriptions, refer to related descriptions below.

It should be noted that this application provides two manners of deploying the thumbnail storage module. The following describes the two manners of deploying the thumbnail storage module in detail.

A first deployment manner is that the thumbnail storage module is deployed in the thumbnail service at the framework layer.

In some possible implementations, for example, as shown in FIG. 4, the thumbnail storage module is deployed only in the thumbnail service at the framework layer.

A second deployment manner is that the thumbnail storage module is repeatedly deployed at the application layer and the framework layer.

In some possible implementations, for example, as shown in FIG. 2, the thumbnail storage module is deployed at the application layer, the thumbnail service is deployed at the framework layer, and the thumbnail service includes the thumbnail storage module. Therefore, for the electronic device, the thumbnail storage module is repeatedly deployed.

In some other possible implementations, for example, as shown in FIG. 3, the thumbnail storage module is deployed at the application layer, and the thumbnail service is deployed at the application framework layer. For the electronic device, the thumbnail storage module is repeatedly deployed.

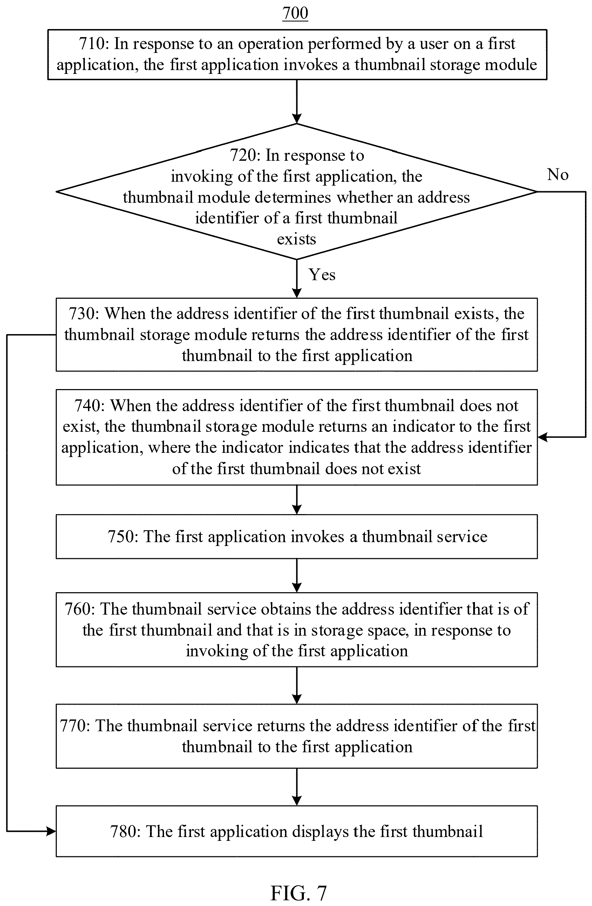

The two deployment manners of the thumbnail storage module correspond to two thumbnail management methods. The following separately describes the two methods in detail with reference to FIG. 5 and FIG. 7.

The following first describes, with reference to FIG. 5, a thumbnail management method applicable to the first deployment manner of the thumbnail storage module.

FIG. 5 is a schematic flowchart of a thumbnail management method according to an embodiment of this application.

As shown in FIG. 5, the method 500 may include step 510 to step 540. The steps in the method 500 may be performed by an electronic device, or the method 500 may be performed by a component (for example, a chip or a chip system) configured in the electronic device, or may be implemented by a logical module or software that can implement all or some functions of the electronic device. This is not limited in embodiments of this application.

The electronic device may have the structure shown in FIG. 1, FIG. 2, FIG. 3, or FIG. 4. This is not limited in embodiments of this application. The following describes the steps in FIG. 5 in detail.

Step 510: In response to an operation performed by a user on a first application, the first application invokes a thumbnail service.

It may be understood that one or more applications may be installed in the electronic device, and the one or more applications may have permission to directly or indirectly access an original image of the electronic device. In this embodiment of this application, the application that can directly or indirectly access the original image may include but is not limited to an instant messaging application, a shopping application, a game community application, a video application, or the like.

For ease of description, any one of the one or more applications that are in the electronic device and that have permission to access an original image is denoted as the first application.

The first application may interact with the thumbnail service to read a thumbnail.

In some examples, the first application may include an application such as Gallery or Album. In response to an operation of opening a gallery or an album by the user, the application such as Gallery or Album may invoke the thumbnail service in the electronic device, to read a thumbnail corresponding to an original image.

In some other examples, the first application may alternatively include another application other than Gallery or Album, for example, an application such as Camera or Files. These applications may directly or indirectly access an original image. In response to an operation performed by the user, these applications may invoke the thumbnail service, to read a thumbnail corresponding to an original image.

It may be understood that Gallery, Album, Camera, and Files are all system applications in the electronic device, and the first application may further include some third-party applications. Details are not listed herein in this application.

Step 520: The thumbnail service obtains an address identifier that is of a first thumbnail corresponding to a first original image and that is in storage space, in response to invoking of the first application.

For ease of description, in this embodiment of this application, any original image is denoted as the first original image. The first thumbnail is a thumbnail corresponding to the first original image.

As described above, the thumbnail service is deployed at a framework layer of an operating system of the electronic device.

In some examples, the framework layer of the operating system of the electronic device may be the framework layer shown in FIG. 2, and the thumbnail service may be deployed at the framework layer.

In some other examples, the framework layer of the operating system of the electronic device may be the application framework layer shown in FIG. 3, and the thumbnail service may be deployed at the application framework layer.

The thumbnail service may manage thumbnails on the electronic device in a unified manner, and obtain the address identifier (for example, a handle) that is of the first thumbnail and that is in the preset storage space. The storage space is open to the one or more applications in the electronic device. In other words, the thumbnail service may generate the first thumbnail based on the first original image, and cache the generated first thumbnail according to a preset storage path rule, to obtain the handle of the first thumbnail, so that the first application quickly reads the first thumbnail.

The preset storage path rule corresponds to the preset storage space. The thumbnail service may store the generated thumbnail to the preset storage space according to the preset storage path rule, and the thumbnail service may further find the cached thumbnail in the preset storage space according to the preset storage path rule.

As an example rather than a limitation, the preset storage path rule includes: dividing last m digits of a key (key) value corresponding to the first original image by n to obtain a remainder, and using the remainder as a folder name of a folder used to store the first thumbnail of the first original image. The folder is a folder in the preset storage space, and m and n are integers greater than or equal to 1. In other words, thumbnails corresponding to all original images on the electronic device may be stored to m folders in the preset storage space in a normal distribution manner.

In this way, the handle of the first thumbnail may be obtained according to the preset storage path rule. As an example rather than a limitation, if the preset storage space path is "/storage/sdcard0/Pictures/.hwthumbnails/", the handle of the first thumbnail may be "/storage/sdcard0/Pictures/.hwthumbnails/folder name/key value of the first original image.jpeg". It may be understood that "jpeg" is a storage format of a picture, and should not constitute any limitation to this application. In this application, the picture may alternatively be in another storage format, for example, "jpg", "png", or "gif". This is not limited in this embodiment of this application.

For example, if the key value of the first original image is "Md123", n=3, m=100, and the preset storage space path is "/storage/sdcard0/Pictures/.hwthumbnails/", the handle of the first thumbnail corresponding to the first original image may be "/storage/sdcard0/Pictures/.hwthumbnails/23/Md123.jpeg".

In a possible implementation, before the thumbnail service obtains the address identifier that is of the first thumbnail corresponding to the first original image and that is in the storage space, the method 500 further includes: The thumbnail service determines whether the address identifier of the first thumbnail exists.

In other words, the thumbnail service may further determine whether the address identifier of the first thumbnail exists.

It may be understood that, when the first thumbnail is cached in the electronic device, the address identifier of the first thumbnail exists; or when the first thumbnail is not cached in the electronic device, the address identifier of the first thumbnail does not exist. In other words, the thumbnail service can determine, based on a case of whether the address identifier of the first thumbnail exists, whether the first thumbnail is cached in the electronic device.

For example, the thumbnail service may obtain the handle of the first thumbnail through prediction according to the preset storage path rule, and may perform matching in the folder in the preset storage space based on the obtained handle of the first thumbnail through prediction. When matching succeeds, the thumbnail service may determine that the handle of the first thumbnail exists, that is, the first thumbnail is stored in the electronic device. When matching does not succeed, the thumbnail service may determine that the handle of the first thumbnail does not exist, that is, the first thumbnail does not exist.

In a possible implementation, that the thumbnail service obtains the address identifier that is of the first thumbnail corresponding to the first original image and that is in the storage space, in response to invoking of the first application includes: In response to invoking of the first application, when the address identifier of the first thumbnail does not exist, the thumbnail service generates the first thumbnail based on the first original image; and the thumbnail service stores the first thumbnail to the storage space, to obtain the address identifier of the first thumbnail; or in response to invoking of the first application, when the handle of the first thumbnail exists, the thumbnail service reads the address identifier of the first thumbnail from the storage space.

As described above, the thumbnail service may determine whether the handle of the first thumbnail exists.

When the handle of the first thumbnail exists, the thumbnail service may directly read the handle of the first thumbnail from the preset storage space. In other words, when the thumbnail service may directly read the handle of the first thumbnail from the preset storage space, the thumbnail service may determine that the handle of the first thumbnail exists.

When the handle of the first thumbnail does not exist, the thumbnail service may generate the first thumbnail after performing operations such as decoding and subsampling on the first original image, determine, according to the preset storage path rule, the folder name of the folder used to store the first thumbnail, and then store the first thumbnail to a corresponding folder in the preset storage space, to obtain the handle of the first thumbnail.

Step 530: The thumbnail service returns the address identifier of the first thumbnail to the first application.

After obtaining the address identifier of the first thumbnail, the thumbnail service may return the handle of the first thumbnail to the first application, so that the first application reads the first thumbnail based on the address identifier of the first thumbnail.

Step 540: The first application displays the first thumbnail.

After the thumbnail service returns the address identifier of the first thumbnail to the first application, the first application may read the first thumbnail based on the address identifier of the first thumbnail, and display the first thumbnail on a user interface of the first application.

In a possible implementation, the method 500 further includes: In response to an operation performed by the user on a second application in the electronic device, the second application invokes the thumbnail service; the thumbnail service obtains the address identifier of the first thumbnail, in response to invoking of the second application; the thumbnail service returns the address identifier of the first thumbnail to the second application; and the second application displays the first thumbnail.

It may be understood that the second application is also an application that has permission to directly or indirectly access an original image, and the second application and the first application are not a same application. The operation performed by the user on the second application may be starting the second application or opening an interface of the second application. After the interface is opened, the first thumbnail may be displayed.

The second application may also interact with the thumbnail service to read a thumbnail. More specifically, in response to the operation performed by the user, the second application may invoke the thumbnail service, to read the first thumbnail. In addition, in response to invoking of the second application, the thumbnail service may obtain the address identifier of the first thumbnail, and then return the address identifier of the first thumbnail to the second application. In this way, the second application may read and display the first thumbnail based on the address identifier of the first thumbnail. For more detailed descriptions, refer to the foregoing related descriptions of interaction between the first application and the thumbnail service. For brevity, details are not described herein again.

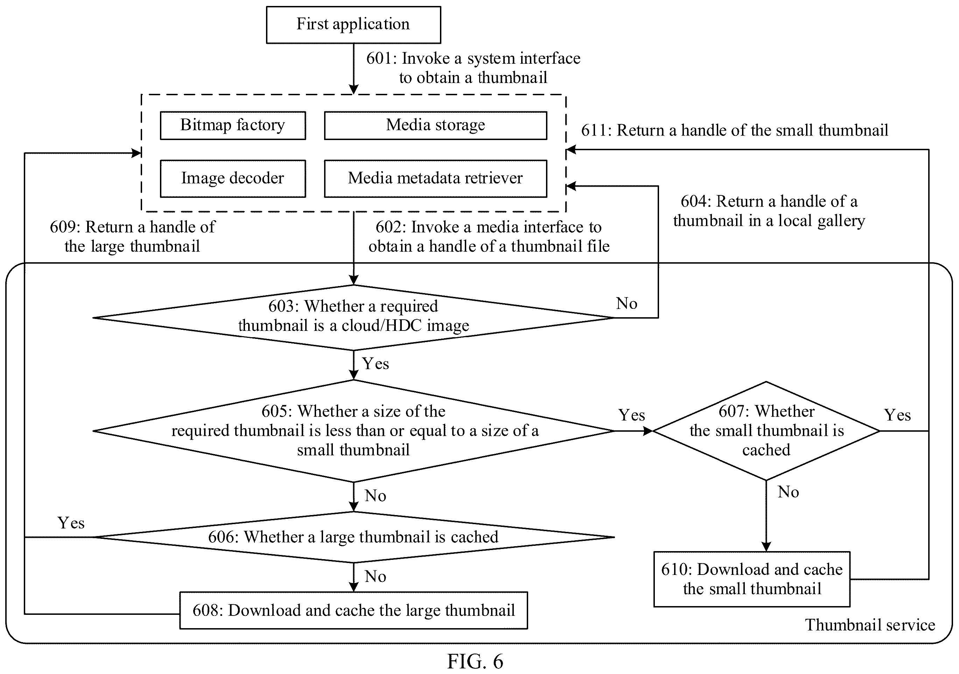

FIG. 6 is another schematic flowchart of a thumbnail management method according to an embodiment of this application.

For example, as shown in FIG. 6, the thumbnail management method applicable to a first deployment manner of a thumbnail storage module may also include step 601 to step 611. The following describes step 601 to step 611 in FIG. 6.

Step 601: A first application invokes a system interface to obtain a thumbnail.

In other words, when the first application needs to access a first thumbnail, the first application may invoke the system interface.

The system interface may include the AOSP API mentioned above. A related utility class such as a bitmap factory (bitmapfactory), a media storage, an image decoder (imagedecoder), or a media metadata retriever (mediametadataretriever) can be accessed through the system interface. It should be noted that the related utility class may include but is not limited to the utility class mentioned above.

Step 602: The related utility class invokes a media interface to obtain a handle of a thumbnail file.

In other words, in response to access of the first application, the related utility class may invoke the media interface to obtain a handle of the first thumbnail by accessing a thumbnail service, and then read data of the first thumbnail based on the handle of the first thumbnail, to return the data of the first thumbnail to the first application.

Step 603: The thumbnail service determines whether a thumbnail required by the first application is a cloud/HDC image.

In some examples, an electronic device may determine whether an original image needs to interact with another electronic device, a server, or the like other than the electronic device, to perform a corresponding operation.

For example, in response to access of the related utility class, the thumbnail service determines whether the thumbnail required by the first application is a thumbnail corresponding to an original image in a cloud gallery or a thumbnail corresponding to an original image in an HDC.

When the thumbnail required by the first application is not the thumbnail corresponding to the original image in the cloud gallery or the thumbnail corresponding to the original image in the HDC, the thumbnail service may perform step 604.

When the thumbnail required by the first application is the thumbnail corresponding to the original image in the cloud gallery or the thumbnail corresponding to the original image in the HDC, the thumbnail service may perform step 605.

Step 604: The thumbnail service returns a handle of a thumbnail in a local gallery to the related utility class.

In this step, the thumbnail service may first determine whether the handle of the first thumbnail exists in the electronic device.

When the handle of the first thumbnail exists, the thumbnail service returns the handle of the first thumbnail to the related utility class.

When the handle of the first thumbnail does not exist, the thumbnail service may first generate the first thumbnail based on the original image, store the generated first thumbnail to storage space to obtain the handle of the first thumbnail, and then return the handle of the first thumbnail to the utility class.

Step 605: The thumbnail service determines whether a size of the thumbnail required by the first application is less than or equal to a size of a small thumbnail.

When the size of the thumbnail required by the first application is not less than or not equal to the size of the small thumbnail, the thumbnail service may perform step 606.

When the size of the thumbnail required by the first application is less than or equal to the size of the small thumbnail, the thumbnail service may perform step 607.

Step 606: The thumbnail service determines whether a large thumbnail is cached in the electronic device.

The thumbnail service may determine whether the first thumbnail whose size is a size corresponding to the large thumbnail is cached in the electronic device.

When the first thumbnail whose size is the size corresponding to the large thumbnail is not cached in the electronic device, the thumbnail service may perform step 608.

When the first thumbnail whose size is the size corresponding to the large thumbnail is cached in the electronic device, the thumbnail service may perform step 609.

Step 607: The thumbnail service determines whether the small thumbnail is cached in the electronic device.

The thumbnail service may determine whether the first thumbnail whose size is the size corresponding to the small thumbnail is cached in the electronic device.

When the first thumbnail whose size is the size corresponding to the small thumbnail is not cached in the electronic device, the thumbnail service may perform step 610.

When the first thumbnail whose size is the size corresponding to the small thumbnail is cached in the electronic device, the thumbnail service may perform step 611.

Step 608: The thumbnail service downloads and caches the large thumbnail.

When the first thumbnail whose size is the size corresponding to the large thumbnail is not cached in the electronic device, the thumbnail service may first download, based on a cloud gallery synchronization service/HDC synchronization service, the first thumbnail whose size is the size corresponding to the large thumbnail, and cache the first thumbnail in the electronic device.

Step 609: The thumbnail service returns a handle of the large thumbnail to the related utility class.

Step 610: The thumbnail service downloads and caches the small thumbnail.

When the first thumbnail whose size is the size corresponding to the small thumbnail is not cached in the electronic device, the thumbnail service may first download, based on a cloud gallery synchronization service/HDC synchronization service, the first thumbnail whose size is the size corresponding to the small thumbnail, and cache the first thumbnail in the electronic device.

Step 611: The thumbnail service returns a handle of the small thumbnail to the related utility class.

After obtaining the handle of the first thumbnail that meets a size requirement, the related utility class may read the data of the first thumbnail based on the handle of the first thumbnail. The related utility class may return the data of the first thumbnail to the first application, so that the first application obtains the first thumbnail.

Based on the foregoing solution, thumbnails of original images in the gallery, the cloud gallery, the HDC gallery, or the like on the electronic device are managed and stored in a unified manner through the thumbnail service, that is, the thumbnails are cached in the electronic device in a unified manner, and an application does not need to cache the thumbnails. This can save storage space on the electronic device, and resolve a problem of a waste of storage space.

In addition, an application that has permission to directly or indirectly access an original image on the electronic device may invoke the thumbnail service to obtain a handle of a thumbnail. This reduces a quantity of times the electronic device performs operations such as decoding and subsampling on the original image, reduces power consumption of the electronic device, and resolves an electricity consumption problem. For example, because an application does not need to cache a thumbnail again, when storage space on the electronic device is insufficient, a thumbnail cached in the electronic device is not cleared when a user clears a cache of the application. After the cache of the application is cleared, the electronic device does not need to perform steps of generating the thumbnail and caching the thumbnail again when the application obtains the thumbnail. Therefore, this can reduce a quantity of times the electronic device performs operations such as decoding and subsampling on an original image, reduce power consumption of the electronic device, and resolve an electricity consumption problem.

The following describes, with reference to FIG. 7, a thumbnail management method applicable to the second deployment manner of the thumbnail storage module.

FIG. 7 is still another schematic flowchart of a thumbnail management method according to an embodiment of this application.

As shown in FIG. 7, the method 700 may include but is not limited to step 710 to step 780. The steps in the method 700 may be performed by an electronic device, or the method 700 may be performed by a component (for example, a chip or a chip system) configured in the electronic device, or may be implemented by a logical module or software that can implement all or some functions of the electronic device. This is not limited in embodiments of this application.

The electronic device may have the structure shown in FIG. 1, FIG. 2, FIG. 3, or FIG. 4. This is not limited in embodiments of this application. The following describes the steps in FIG. 7 in detail.

Step 710: In response to an operation performed by a user on a first application, the first application invokes a thumbnail storage module.

As described above, one or more applications may be installed in the electronic device, and the one or more applications may have permission to directly or indirectly access an original image of the electronic device. The first application is any one of the one or more applications that are in the electronic device and that have permission to access an original image.

A first original image is any original image, and a first thumbnail is a thumbnail corresponding to the first original image.

For detailed descriptions of the first application, the first original image, and the first thumbnail, refer to the foregoing related descriptions. For brevity, details are not described herein again.

The thumbnail storage module may determine, according to a preset storage path rule, whether a handle of the first thumbnail exists. That is, the thumbnail storage module may determine whether the first thumbnail is cached in the electronic device.

The first application may interact with the thumbnail storage module and a thumbnail service to read a thumbnail.

When the first application in the electronic device needs to access a thumbnail, the first application may invoke the thumbnail storage module on the electronic device, and use the thumbnail storage module to directly query whether an address identifier of the first thumbnail exists in preset storage space.

For detailed descriptions of the preset storage path rule and the preset storage space, refer to the foregoing related descriptions. For brevity, details are not described herein again.

Step 720: In response to invoking of the first application, the thumbnail storage module determines whether the address identifier of the first thumbnail exists.

In response to invoking of the first application, the thumbnail storage module may directly query the preset storage space according to the preset storage path rule, to determine whether the address identifier (for example, the handle) of the first thumbnail exists.

When the address identifier of the first thumbnail exists, the thumbnail storage module may perform step 730.

When the address identifier of the first thumbnail does not exist, the thumbnail storage module may perform step 740.

Step 730: When the address identifier of the first thumbnail exists, the thumbnail storage module returns the address identifier of the first thumbnail to the first application.

When the handle of the first thumbnail exists, that is, when the first thumbnail is cached in the electronic device, the thumbnail storage module may directly return the address identifier of the first thumbnail to the first application, so that the first application reads the first thumbnail based on the address identifier of the first thumbnail.

After performing step 730, the electronic device may perform step 780.

Step 740: When the address identifier of the first thumbnail does not exist, the thumbnail storage module returns an indicator to the first application, where the indicator indicates that the address identifier of the first thumbnail does not exist.

When the address identifier of the first thumbnail does not exist, that is, when the first thumbnail is not cached in the electronic device, the thumbnail storage module may return an indicator indicating that the address identifier of the first thumbnail does not exist to the first application, where the indicator may be predefined.

Step 750: The first application invokes the thumbnail service.

After receiving the indicator that is returned by the thumbnail storage module and that indicates that the address identifier of the first thumbnail does not exist, the first application may invoke the thumbnail service.

As described above, the thumbnail storage module is deployed at an application layer of an operating system of the electronic device, and the thumbnail service is deployed at a framework layer of the operating system of the electronic device.

In a possible implementation, the application layer and the framework layer of the operating system of the electronic device may be the application layer and the framework layer shown in FIG. 2, the thumbnail storage module may be deployed at the application layer, and the thumbnail service may be deployed at the framework layer.

In another possible implementation, the application layer and the framework layer of the operating system of the electronic device may be the application layer and the application framework layer shown in FIG. 3, the thumbnail storage module may be deployed at the application layer, and the thumbnail service may be deployed at the application framework layer.

The thumbnail storage module is repeatedly deployed at the application layer and the framework layer of the electronic device. When the first thumbnail is cached in the electronic device, the first application may directly read the first thumbnail from the preset storage space through the thumbnail storage module at the application layer, and does not need to invoke the thumbnail service across layers to obtain the first thumbnail, so that the first application can read the thumbnail more conveniently and efficiently. This can save time spent in reading a thumbnail across layers, and improve thumbnail reading performance. When the first thumbnail is not cached in the electronic device, the first application invokes the thumbnail service across layers to obtain the first thumbnail.

It should be noted that versions of the thumbnail storage module deployed at the application layer and the thumbnail storage module deployed in the thumbnail service at the framework layer may be marked to ensure that after a version of the operating system of the electronic device is updated and/or a version of a third-party application is updated, the version of the thumbnail storage module deployed at the application layer and the version of the thumbnail storage module deployed in the thumbnail service at the framework layer are a same version, and preset storage path rules in the thumbnail storage modules of the same version are the same. This ensures effective implementation of the method.

Step 760: The thumbnail service obtains the address identifier that is of the first thumbnail and that is in the storage space, in response to invoking of the first application.

When the first thumbnail is not cached in the electronic device, the first application invokes the thumbnail service across layers. Correspondingly, the thumbnail service may obtain the address identifier that is of the first thumbnail and that is in the storage space, in response to invoking of the first application.

In a possible implementation, that the thumbnail service obtains the address identifier that is of the first thumbnail and that is in the storage space, in response to invoking of the first application includes: In response to invoking of the first application, the thumbnail service generates the first thumbnail based on the first original image; and the thumbnail service stores the first thumbnail to the storage space, to obtain the address identifier of the first thumbnail.

In response to invoking of the first application, the thumbnail service may generate the first thumbnail after performing operations such as decoding and subsampling on the first original image, determine, according to the preset storage path rule, a folder name of a folder used to store the first thumbnail, and then store the first thumbnail to a corresponding folder in the preset storage space, to obtain the handle of the first thumbnail.

Step 770: The thumbnail service returns the address identifier of the first thumbnail to the first application.

For detailed descriptions, refer to the foregoing related descriptions of step 530. For brevity, details are not described herein again.

Step 780: The first application displays the first thumbnail.

For detailed descriptions, refer to the foregoing related descriptions of step 540. For brevity, details are not described herein again.

In a possible implementation, the method 700 further includes: In response to an operation performed by the user on a second application in the electronic device, the second application invokes the thumbnail storage module; in response to invoking of the second application, the thumbnail storage module determines whether the address identifier of the first thumbnail exists; and when the address identifier of the first thumbnail exists, the thumbnail storage module returns the address identifier of the first thumbnail to the second application; or when the address identifier of the first thumbnail does not exist, the thumbnail storage module returns the indicator to the second application; the second application invokes the thumbnail service; the thumbnail service obtains the address identifier that is of the first thumbnail and that is in the storage space, in response to invoking of the second application; the thumbnail service returns the address identifier of the first thumbnail to the second application; and the second application displays the first thumbnail.

As described above, the second application is also an application that has permission to directly or indirectly access an original image, and the second application and the first application are not a same application. The operation performed by the user on the second application may be starting the second application or opening an interface of the second application. After the interface is opened, the first thumbnail may be displayed.

The second application may also interact with the thumbnail storage module and the thumbnail service to read a thumbnail. More specifically, in response to the operation performed by the user, the second application may invoke the thumbnail storage module, to read the first thumbnail; in response to invoking of the second application, the thumbnail storage module may determine whether the address identifier of the first thumbnail exists in the storage space; and when the address identifier of the first thumbnail exists, the thumbnail storage module returns the address identifier of the first thumbnail to the second application, so that the second application may read and display the first thumbnail based on the address identifier of the first thumbnail; or when the address identifier of the first thumbnail does not exist, the thumbnail storage module returns the indicator indicating that the address identifier of the first thumbnail does not exist to the second application to notify the second application that the first thumbnail does not exist, so that the second application may invoke the thumbnail service. Correspondingly, in response to invoking of the second application, the thumbnail service may obtain the address identifier of the first thumbnail, and return the address identifier of the first thumbnail to the second application. In this way, the second application may read and display the first thumbnail based on the address identifier of the first thumbnail. For more detailed descriptions, refer to the foregoing related descriptions of interaction between the first application and the thumbnail storage module as well as the thumbnail service. For brevity, details are not described herein again.

In some possible implementations of FIG. 5 to FIG. 7, the thumbnail management method further includes: When the electronic device is in a sleep state, or when preset trigger time is reached, the thumbnail service detects whether a corresponding address identifier of a second thumbnail exists for a second original image currently stored in the electronic device; when the address identifier of the second thumbnail does not exist, the thumbnail service generates the second thumbnail based on the second original image; and the thumbnail service stores the generated second thumbnail to the storage space, to obtain the address identifier of the second thumbnail.

Even if no first application invokes the thumbnail service, the thumbnail service may actively manage the thumbnail. For example, when a preset trigger condition is met, the thumbnail service may actively detect whether a handle of the corresponding thumbnail exists for an original image currently stored in the electronic device. The preset trigger condition may include: The electronic device is in the sleep state, or the preset trigger time is reached.

For example, when the electronic device is in the sleep state, or when the preset trigger time is reached, the thumbnail service may actively determine, according to the preset storage path rule and based on a key value of each original image currently stored in the electronic device, which handles of thumbnails corresponding to original images exist currently and which handles of thumbnails corresponding to original images do not exist currently, that is, determine which thumbnails corresponding to original images are currently cached in the electronic device and which thumbnails corresponding to original images are not cached in the electronic device.

For ease of description, in this embodiment of this application, an original image whose corresponding thumbnail is not currently cached in the electronic device is denoted as the second original image, and a thumbnail corresponding to the second original image is denoted as the second thumbnail.

When a handle of the second thumbnail does not exist, the thumbnail service may generate the second thumbnail after performing operations such as decoding and subsampling on the second original image, determine, according to the preset storage path rule, a folder name of a folder used to store the second thumbnail, and then store the second thumbnail to a corresponding folder in the preset storage space, to obtain the handle of the second thumbnail. Therefore, when the first application invokes the thumbnail service, the thumbnail service can more quickly return a handle of a thumbnail required by the first application to the first application. This may increase a speed of obtaining a thumbnail by the first application.

As described above, a thumbnail management module in the thumbnail service may further provide a thumbnail aging mechanism.

In other words, the thumbnail management module may periodically clear some thumbnails that are not read for a long period of time. For example, a time threshold may be set. When some thumbnails have not been read for a period exceeding the time threshold (the thumbnails may be referred to as aged thumbnails), the thumbnail management module may first clear these thumbnails, to release storage space occupied by these thumbnails. This mechanism may be referred to as the thumbnail aging mechanism. In other words, the thumbnail management module may clear the aged thumbnails. As an example rather than a limitation, the time threshold may be 10 days, 15 days, one month, three months, half a year, or the like. This is not limited in this embodiment of this application.

In some possible implementations of FIG. 5 to FIG. 7, a third thumbnail that meets a preset condition has a reference flag, and the reference flag indicates that the third thumbnail cannot be cleared.

As described above, the thumbnail management module may further provide another thumbnail management capability, and the another thumbnail management capability may include: providing a protection mechanism for preventing a thumbnail that meets a preset condition from being cleared.

For ease of description, in this application, a thumbnail that meets the preset condition is denoted as the third thumbnail.

In other words, the thumbnail management module in the thumbnail service may determine which thumbnails meet the preset condition and which thumbnails do not meet the preset condition, and set a reference flag for a thumbnail that meets the preset condition, to prevent the thumbnail from being cleared due to aging, or to prevent the thumbnail from being cleared in a process in which a cache of the operating system of the electronic device is cleared.

In some possible implementations, the preset condition includes: The third thumbnail is set to a cover of an image set to which an original image corresponding to the third thumbnail belongs. In other words, in some possible implementations, the thumbnail management method further includes: in response to a creation operation performed by the user, creating an image set, where the image set includes at least one original image, and a cover of the image set is the third thumbnail with a reference flag; storing, by the thumbnail service, the third thumbnail to the storage space; and when the electronic device clears a thumbnail in the storage space, retaining the third thumbnail corresponding to the cover based on the reference flag.

It may be understood that the image set may be a set of original images classified by time, place, user-customized tag, system-defined tag (for example, tags such as "wonderful moment", "person", "animal", and "building"), or the like. This is not limited in this application.

In response to the creation operation performed by the user for creating the image set, the electronic device may create the image set. The image set includes at least one original image, and the cover of the image set is the third thumbnail with the reference flag. When the electronic device clears a thumbnail cached in the storage space, the electronic device may retain the third thumbnail based on the reference flag, that is, the third thumbnail set as the cover of the image set is not cleared.

In other words, for thumbnails that are automatically set by a user or a system as a cover of an image set, the thumbnail management module in the thumbnail service may set reference flags for the thumbnails, to prevent the thumbnail from being cleared due to aging, or to prevent the thumbnail from being cleared in a process in which a cache of the operating system of the electronic device is cleared. This avoids a problem that a blank cover or a black cover is displayed because a cover of an image set is cleared, and helps improve user experience.

The thumbnail management module in the thumbnail service may also provide a mechanism for deleting a reference flag of a thumbnail. For example, when a thumbnail a is previously set as a cover of an image set, a reference flag is set for the thumbnail a by the thumbnail management module. Later, if a user changes the cover of the image set to a thumbnail b, the thumbnail management module may delete the reference flag of the thumbnail a.

Based on the foregoing solution, thumbnails of original images in a gallery, a cloud gallery, an HDC gallery, or the like on the electronic device are managed and stored in a unified manner through the thumbnail service, the thumbnails are cached in the electronic device in a unified manner, and an application does not need to cache the thumbnails. This can save storage space on the electronic device, and resolve a problem of a waste of storage space.

In addition, the thumbnail storage module is deployed at the application layer of the electronic device. When the first thumbnail is cached in the electronic device, the first application may directly read the first thumbnail from the preset storage space through the thumbnail storage module at the application layer, and does not need to invoke the thumbnail service across layers to obtain the first thumbnail, so that the first application can read the thumbnail more conveniently and efficiently. This can save time spent in reading a thumbnail across layers, improve thumbnail reading performance, and resolve a thumbnail display delay problem.

In addition, an application that has permission to directly or indirectly access an original image on the electronic device may invoke the thumbnail service to obtain a handle of a thumbnail. This reduces a quantity of times the electronic device performs operations such as decoding and subsampling on the original image, reduces power consumption of the electronic device, and resolves an electricity consumption problem. For example, because an application does not need to cache a thumbnail again, when storage space on the electronic device is insufficient, a thumbnail cached in the electronic device is not cleared when a user clears a cache of the application. After the cache of the application is cleared, the electronic device does not need to perform steps of generating the thumbnail and caching the thumbnail again when the application obtains the thumbnail. Therefore, this can reduce a quantity of times the electronic device performs operations such as decoding and subsampling on an original image, reduce power consumption of the electronic device, and resolve an electricity consumption problem.

An embodiment of this application further provides an electronic device. The electronic device includes a corresponding module configured to perform the steps in the embodiment in FIG. 5, FIG. 6, or FIG. 7. The module included in the electronic device may be implemented through software and/or hardware.

An embodiment of this application further provides an electronic device. The electronic device includes a memory and a processor. The memory is configured to store a computer program, and the processor is configured to invoke and execute the computer program, so that the electronic device performs the steps in the embodiment in FIG. 5, FIG. 6, or FIG. 7.

This application further provides a chip system. The chip system includes at least one processor, configured to implement the functions in the steps in the embodiment in FIG. 5, FIG. 6, or FIG. 7.

In a possible design, the chip system further includes a memory, the memory is configured to store program instructions and data, and the memory is located inside or outside the processor.

The chip system may include a chip, or may include a chip and another discrete device.

An embodiment of this application further provides a computer-readable storage medium. The computer-readable storage medium stores a computer program. When the computer program is executed by a computer, the computer is enabled to perform the steps in the embodiment in FIG. 5, FIG. 6, or FIG. 7.

An embodiment of this application further provides a computer program product, including a computer program. When the computer program is run, a computer is enabled to perform the steps in the embodiment in FIG. 5, FIG. 6, or FIG. 7.

It should be noted that the processor in embodiments of this application may be an integrated circuit chip, and has a signal processing capability. In an implementation process, the steps in the foregoing method embodiments can be implemented by using a hardware integrated logic circuit in the processor, or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The methods, the steps, and the logical block diagrams that are disclosed in embodiments of this application may be implemented or performed. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be further understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memories of the systems and methods described in this specification include but are not limited to these and any memory of another proper type.

Terms such as "unit" and "module" used in this specification may indicate computer-related entities, hardware, firmware, combinations of hardware and software, software, or software being executed.

A person of ordinary skill in the art may be aware that various illustrative logical blocks (illustrative logical blocks) and steps (steps) described in embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application. In several embodiments provided in this application, it should be understood that the disclosed apparatus, device, and method may be implemented in other manners. For example, the apparatus embodiments described above are merely examples. For example, division into the modules is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and parts displayed as modules may or may not be physical modules, may be located in one position, or may be distributed on a plurality of network modules. Some or all modules may be selected according to an actual requirement to achieve the objectives of the solutions of embodiments.

In addition, functional modules in embodiments of this application may be integrated into one processing module, or each of the modules may exist alone physically, or two or more units may be integrated into one module.

In the foregoing embodiments, all or some of the functions of the functional modules may be implemented by using software, hardware, firmware, or any combination thereof. When software is used for implementation, all or a part of the embodiments may be implemented in a form of a computer program product. The computer program product includes one or more computer instructions (programs). When the computer program instructions (programs) are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital versatile disc (digital video disc, DVD)), a semiconductor medium (for example, a solid-state disk (solid-state disk, SSD)), or the like.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, or a network device) to perform all or some of the steps in the methods described in embodiments of this application. The storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A thumbnail management method, applied to an electronic device, wherein the method comprises:
in response to an operation performed by a user on a first application, invoking, by the first application, a thumbnail service;
obtaining, by the thumbnail service, an address identifier that is of a first thumbnail corresponding to a first original image and that is in storage space, in response to invoking of the first application;
returning, by the thumbnail service, the address identifier of the first thumbnail to the first application; and
displaying, by the first application, the first thumbnail.

2. The method according to claim 1, wherein before obtaining, by the thumbnail service, the address identifier that is of the first thumbnail corresponding to the first original image and that is in the storage space, the method further comprises:
determining, by the thumbnail service, whether the address identifier of the first thumbnail exists.

3. The method according to claim 2, wherein obtaining, by the thumbnail service, the address identifier that is of the first thumbnail corresponding to the first original image and that is in the storage space, in response to invoking of the first application comprises:
in response to invoking of the first application, when the address identifier of the first thumbnail does not exist, generating, by the thumbnail service, the first thumbnail based on the first original image; and
storing, by the thumbnail service, the first thumbnail to the storage space, to obtain the address identifier of the first thumbnail;
or
in response to invoking of the first application, when the address identifier of the first thumbnail exists, reading, by the thumbnail service, the address identifier of the first thumbnail from the storage space.

4. The method according to any one of claims 1 to 3, wherein the method further comprises:
when the electronic device is in a sleep state, or when preset trigger time is reached, detecting, by the thumbnail service, whether a corresponding address identifier of a second thumbnail exists for a second original image currently stored in the electronic device;
when the address identifier of the second thumbnail does not exist, generating, by the thumbnail service, the second thumbnail based on the second original image; and
storing, by the thumbnail service, the second thumbnail to the storage space, to obtain the address identifier of the second thumbnail.

5. The method according to any one of claims 1 to 4, wherein the method further comprises:
in response to an operation performed by the user on a second application in the electronic device, invoking, by the second application, the thumbnail service;
obtaining, by the thumbnail service, the address identifier of the first thumbnail, in response to invoking of the second application;
returning, by the thumbnail service, the address identifier of the first thumbnail to the second application; and
displaying, by the second application, the first thumbnail.

6. The method according to any one of claims 1 to 5, wherein the method further comprises:
in response to a creation operation performed by the user, creating an image set, wherein the image set comprises at least one original image, and a cover of the image set is a third thumbnail with a reference flag;
storing, by the thumbnail service, the third thumbnail to the storage space; and
when the electronic device clears a thumbnail in the storage space, retaining the third thumbnail corresponding to the cover based on the reference flag.

7. A thumbnail management method, applied to an electronic device, wherein the method comprises:
in response to an operation performed by a user on a first application, invoking, by the first application, a thumbnail storage module;
in response to invoking of the first application, determining, by the thumbnail storage module, whether an address identifier of a first thumbnail corresponding to a first original image exists; and
when the address identifier of the first thumbnail exists, returning, by the thumbnail storage module, the address identifier of the first thumbnail to the first application; or
when the address identifier of the first thumbnail does not exist, returning, by the thumbnail storage module, an indicator to the first application, wherein the indicator indicates that the address identifier of the first thumbnail does not exist;
invoking, by the first application, a thumbnail service;
obtaining, by the thumbnail service, the address identifier that is of the first thumbnail and that is in storage space, in response to invoking of the first application;
returning, by the thumbnail service, the address identifier of the first thumbnail to the first application; and
displaying, by the first application, the first thumbnail.

8. The method according to claim 7, wherein obtaining, by the thumbnail service, the address identifier that is of the first thumbnail and that is in the storage space, in response to invoking of the first application comprises:
in response to invoking of the first application, generating, by the thumbnail service, the first thumbnail based on the first original image; and
storing, by the thumbnail service, the first thumbnail to the storage space, to obtain the address identifier of the first thumbnail.

9. The method according to claim 7 or 8, wherein the method further comprises:
when the electronic device is in a sleep state, or when preset trigger time is reached, detecting, by the thumbnail service, whether a corresponding address identifier of a second thumbnail exists for a second original image currently stored in the electronic device;
when the address identifier of the second thumbnail does not exist, generating, by the thumbnail service, the second thumbnail based on the second original image; and
storing, by the thumbnail service, the second thumbnail to the storage space, to obtain the address identifier of the second thumbnail.

10. The method according to any one of claims 7 to 9, wherein the method further comprises:
in response to an operation performed by the user on a second application in the electronic device, invoking, by the second application, the thumbnail storage module;
in response to invoking of the second application, determining, by the thumbnail storage module, whether the address identifier of the first thumbnail exists; and
when the address identifier of the first thumbnail exists, returning, by the thumbnail storage module, the address identifier of the first thumbnail to the second application; or
when the address identifier of the first thumbnail does not exist, returning, by the thumbnail storage module, the indicator to the second application;
invoking, by the second application, the thumbnail service;
obtaining, by the thumbnail service, the address identifier that is of the first thumbnail and that is in the storage space, in response to invoking of the second application;
returning, by the thumbnail service, the address identifier of the first thumbnail to the second application; and
displaying, by the second application, the first thumbnail.

11. The method according to any one of claims 7 to 10, wherein the method further comprises:
in response to a creation operation performed by the user, creating an image set, wherein the image set comprises at least one original image, and a cover of the image set is a third thumbnail with a reference flag;
storing, by the thumbnail service, the third thumbnail to the storage space; and
when the electronic device clears a thumbnail in the storage space, retaining the third thumbnail corresponding to the cover based on the reference flag.

12. An electronic device, comprising a processor and a memory, wherein
the memory is configured to store a computer program; and
the processor is configured to invoke the computer program, so that the electronic device performs the method according to any one of claims 1 to 11.

13. A computer-readable storage medium, wherein the computer-readable storage medium stores a computer program; and when the computer program is executed, a computer is enabled to perform the method according to any one of claims 1 to 11.

14. A computer program product, comprising a computer program, wherein when the computer program is run, a computer is enabled to perform the method according to any one of claims 1 to 11.
